# FASCICULE DE BREVET EUROPEEN

(11) **EP 2 889 580 B1**
(45) Date de publication et mention de la délivrance du brevet: **11.07.2018**
(21) Numéro de dépôt: 14307081.1
(22) Date de dépôt: 18.12.2014
(51) Int. Cl.: G01C 21/20, G01S 7/04, G06F 3/0481, G06F 21/00

(54) **Système d'aide à la navigation et procédé mis en oeuvre dans un tel système**
Navigationssystem und in diesem System verwendetes Verfahren
Navigation assistance system and method implemented in such a system

(30) Priorité: 20.12.2013 FR 1363314
(43) Date de publication de la demande: 01.07.2015
(73) Titulaire: Ixblue, 78100 Saint-Germain-en Laye (FR)
(72) Inventeur: Belot, Stéphane, 91590 D'Huison Longueville (FR)
(74) Mandataire: Jacobacci Coralis Harle

(56) Documents cités:
- EP-A2- 2 518 611
- WO-A1-2011/027032
- US-A1- 2011 254 863
- IAIN BATE ET AL: "Architectural considerations in the certification of modular systems", RELIABILITY ENGINEERING & SYSTEM SAFETY, vol. 81, no. 3, 1 septembre 2003 (2003-09-01), pages 303-324, XP055139931, ISSN: 0951-8320, DOI: 10.1016/S0951-8320(03)00094-2

## Description

### DOMAINE TECHNIQUE AUQUEL SE RAPPORTE L'INVENTION

La présente invention concerne de manière générale les outils d'aide à la navigation, notamment pour la navigation maritime.

Elle concerne plus particulièrement un système d'aide à la navigation, conçu pour basculer entre un mode de fonctionnement certifié selon une norme et un mode de fonctionnement non-certifié.

La présente invention concerne également un procédé mis en oeuvre dans un tel système.

### ARRIÈRE-PLAN TECHNOLOGIQUE

Certains systèmes d'aide à la navigation maritime sont conçus conformément à des normes de réalisation définies par la convention SOLAS ("*Safety of Life at Sea*") de l'Organisation Maritime Internationale et identifiées sous l'appellation ECDIS (pour *"Electronic Chart Display and Information System"*) comme dans le document EP 2518611. Ces normes de réalisation spécifiques peuvent toutefois ne pas répondre à certains besoins, en particulier lorsque l'on cherche à ajouter au système d'aide à la navigation des fonctionnalités utiles à certaines applications, par exemple la pêche en mer.

On connaît par ailleurs des systèmes basés sur une architecture modulaire dans lesquels le fonctionnement du système repose sur la coopération de différents modules, comme illustré par le document "Architectural considérations in the certification of modular systems", par Bate et Kelly. Lorsque l'utilisation d'un tel système est soumise à certification, il est classiquement nécessaire de procéder à la certification de l'ensemble des modules qui coopèrent afin de garantir le fonctionnement certifié du système.

### OBJET DE L'INVENTION

Dans ce contexte, la présente invention propose un système d'aide à la navigation, conçu pour basculer entre un mode de fonctionnement certifié selon une norme et un mode de fonctionnement non-certifié (eu égard à cette norme), caractérisé en ce qu'il est basé sur une architecture modulaire, en ce qu'il est mis en oeuvre par l'exécution de modules compatibles à la norme ayant un attribut de compatibilité et de modules sans attribut de compatibilité, en ce qu'il comprend un indicateur représentatif du mode de fonctionnement courant, et en ce que les modules compatibles sont conçus pour appeler une fonction d'un autre module seulement lorsque l'indicateur est représentatif du mode de fonctionnement non-certifié ou lorsque l'autre module a un attribut de compatibilité.

Ainsi, lorsque le mode de fonctionnement certifié est actif, seuls des appels de module compatible à module compatible sont mis en oeuvre, et les modules sans attribut de compatibilité (sur lesquels aucune contrainte de conception ne s'applique) ne sont donc pas sollicités. L'architecture modulaire du système, intéressante du fait de la souplesse de conception qu'elle confère, n'est donc pas préjudiciable à la sécurité du mode de fonctionnement certifié.

Le basculement d'un mode de fonctionnement à l'autre peut en outre se faire de manière dynamique, par simple modification de l'indicateur précité (par exemple en réponse à une commande de l'utilisateur) et sans arrêt du système, puisque les différents modules n'ont pas besoin d'être modifiés pour tenir compte du changement de mode de fonctionnement.

On peut prévoir notamment qu'au moins un module compatible soit conçu pour consulter l'indicateur et pour adapter son fonctionnement en fonction du mode de fonctionnement désigné par l'indicateur. En variante, on peut prévoir que le système (par exemple au moyen d'un élément de gestion du mode de fonctionnement) est conçu pour émettre, à destination d'au moins un module compatible, une notification spécifiant que l'indicateur a une valeur déterminée ; le module compatible peut alors être conçu pour adapter son fonctionnement en fonction du mode de fonctionnement désigné par ladite valeur déterminée.

Selon une possibilité de mise en oeuvre, au moins un module compatible peut être conçu pour déterminer si un autre module a un attribut de compatibilité par interrogation dudit autre module. En variante, on pourrait prévoir que le module compatible consulte une table recensant les attributs de compatibilité des différents modules.

Un élément de gestion d'interface graphique est par exemple conçu pour appeler une fonction de traçage sur un écran du système, mise en oeuvre par un module graphique, seulement lorsque l'indicateur est représentatif du mode de fonctionnement non-certifié ou lorsque le module graphique a un attribut de compatibilité. Cet élément de gestion d'interface graphique peut être un module principal ou un autre module, qui sera par exemple appelé par le module principal, ou encore, dans une architecture de type composants/conteneur, le conteneur (également dénommé noyau ou structure d'accueil).

On peut prévoir également comme expliqué plus loin qu'un élément de gestion du mode de fonctionnement soit conçu pour interroger un module donné sur la disponibilité d'une commande du module donné lorsque l'indicateur est représentatif du mode de fonctionnement non-certifié ou lorsque le module donné a un attribut de compatibilité, et pour désactiver ladite commande dans les autres cas. Comme pour l'élément de gestion d'interface graphique, l'élément de gestion du mode de fonctionnement peut être le module principal précité ou un autre module, qui sera par exemple appelé par le module principal, ou encore, dans une architecture de type composants/conteneur, le conteneur.

Selon un mode de réalisation envisageable, l'indicateur peut prendre une valeur représentative d'un mode de fonctionnement certifié alternatif, dans lequel par exemple seuls la cartographie et les mobiles (ici les embarcations) sont affichés sur l'écran. Au moins un module compatible peut alors être conçu pour adapter son fonctionnement au mode certifié alternatif lorsque l'indicateur a la valeur représentative du mode de fonctionnement certifié alternatif. Ce module compatible peut par exemple consulter l'indicateur à cet effet ou recevoir une notification signalant la (nouvelle) valeur de l'indicateur, par exemple en provenance de l'élément de gestion du mode de fonctionnement.

L'invention propose également un procédé mis en oeuvre dans un système d'aide à la navigation conçu pour basculer entre un mode de fonctionnement certifié selon une norme et un mode de fonctionnement non-certifié, caractérisé en ce que le système est basé sur une architecture modulaire, en ce que le procédé est mis en oeuvre par l'exécution de modules compatibles à la norme ayant un attribut de compatibilité et de modules sans attribut de compatibilité, et en ce que le procédé comprend les étapes suivantes :
- mise à jour d'un indicateur représentatif du mode de fonctionnement courant,
- appel d'une fonction d'un autre module seulement lorsque l'indicateur est représentatif du mode de fonctionnement non-certifié ou lorsque l'autre module a un attribut de compatibilité.

Dans un mode de réalisation, le procédé comprend en outre les étapes suivantes :
- consultation de l'indicateur par un module compatible ;
- adaptation de son fonctionnement par le module compatible en fonction du mode de fonctionnement désigné par l'indicateur.

Le procédé peut également comprendre une étape d'interrogation d'un autre module par un module compatible pour déterminer si l'autre module a un attribut de compatibilité.

Selon une possibilité de mise en oeuvre, le procédé comprend une étape d'appel, par un élément de gestion d'interface graphique, d'une fonction de traçage sur un écran du système, mise en oeuvre par un module graphique, seulement lorsque l'indicateur est représentatif du mode de fonctionnement non-certifié ou lorsque le module graphique a un attribut de compatibilité.

On peut prévoir en outre une étape d'interrogation, par un élément de gestion du mode de fonctionnement, d'un module donné sur la disponibilité d'une commande du module donné lorsque l'indicateur est représentatif du mode de fonctionnement non-certifié ou lorsque le module donné a un attribut de compatibilité, ou de désactivation de ladite commande dans les autres cas.

Comme déjà indiqué, l'indicateur peut dans certains modes de réalisation prendre en outre une valeur représentative d'un mode de fonctionnement certifié alternatif. On peut alors prévoir une étape d'adaptation, par au moins un module compatible, de son fonctionnement au mode certifié alternatif lorsque l'indicateur a la valeur représentative du mode de fonctionnement certifié alternatif.

### DESCRIPTION DÉTAILLÉE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente schématiquement les éléments principaux d'un exemple de système de navigation conforme aux enseignements de l'invention ;
- la figure 2 représente le fonctionnement du système d'aide à la navigation de la figure 1 en mode de fonctionnement non certifié ;
- la figure 3 représente le fonctionnement du système d'aide à la navigation de la figure 1 en mode de fonctionnement certifié ;
- la figure 4 représente un procédé de traçage d'une représentation graphique dans le cadre du système de navigation de la figures 1 ;
- la figure 5 représente la gestion d'une barre d'outils dans le cadre du système de navigation de la figure 1.

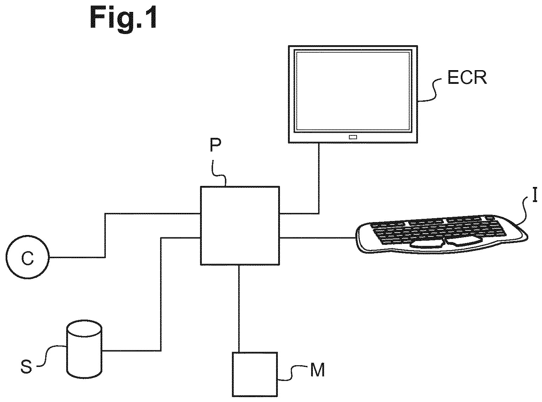

La figure 1 représente schématiquement un exemple de système de navigation maritime : il s'agit ici d'un système à base de microprocesseur, qui comprend notamment un processeur (en l'occurrence un microprocesseur) P, une mémoire M associée au processeur P, une interface utilisateur I (typiquement un clavier ou une souris), un écran ECR et un moyen de mémorisation S, par exemple un disque dur.

Le système comprend également un capteur C de mesure d'un paramètre utile à la navigation. La présente description mentionne un seul capteur C, mais le système d'aide à la navigation décrit pourrait naturellement comporter d'autres capteurs.

La mémoire M stocke notamment des programmes d'ordinateurs, réalisés sous forme de modules, dont l'exécution par le processeur P permet la mise en oeuvre d'un procédé d'aide à la navigation, qui comprend notamment des étapes d'affichage d'informations (typiquement des représentations graphiques ou des objets graphiques comme décrit ci-après) sur l'écran ECR, des étapes de capture d'informations en provenance du capteur C et des étapes de réception d'instructions de l'utilisateur grâce à l'interface utilisateur I.

On pourrait prévoir en variante que chaque module mentionné ci-après soit exécuté (c'est-à-dire mis en oeuvre) au moyen d'un circuit intégré dédié, par exemple un circuit intégré à application spécifique (ou ASIC selon l'appellation anglo-saxonne).

La mémoire stocke également des données et paramètres utiles à la mise en oeuvre du procédé d'aide à la navigation.

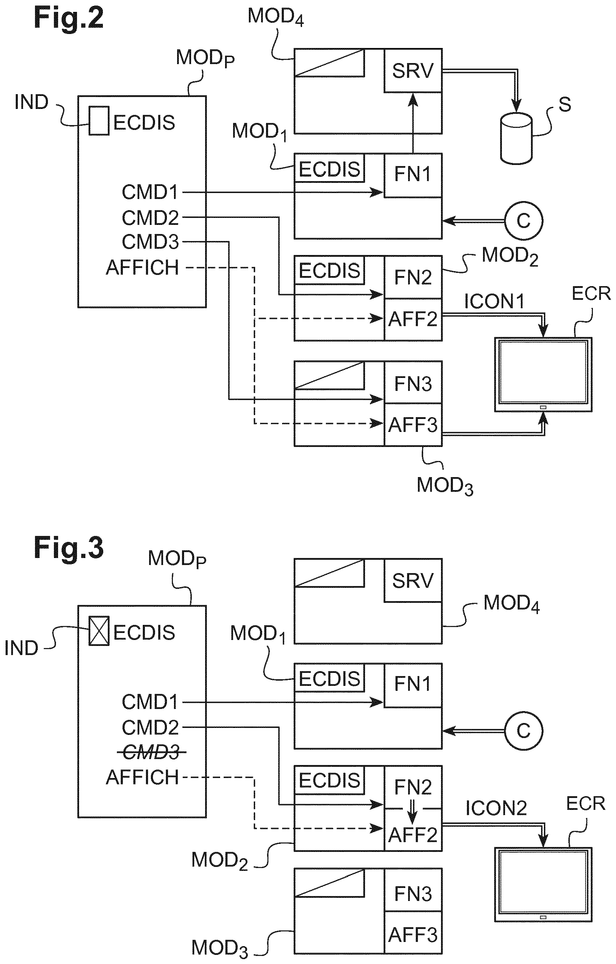

La figure 2 représente divers modules MOD_{P}, MOD₁, MOD₂, MOD₃, MOD₄ impliqués dans la mise en oeuvre du système d'aide à la navigation maritime. Ces modules comprennent un module principal MOD_{P} dont l'exécution est lancée à l'initialisation du système, des modules MOD₁, MOD₂ compatibles à une norme, ici la norme ECDIS, et ayant de ce fait un attribut de compatibilité, et des modules MOD₃, MOD₄ sans attribut de compatibilité, conçus sans prendre en considération les règles de conception dictées par la norme concernée.

Les modules compatibles sont conçus de sorte que leur mise en oeuvre au sein du système d'aide à la navigation soit conforme à la norme concernée, ici la norme ECDIS, et que le système d'aide à la navigation puisse ainsi revendiquer la certification à la norme concernée. On vise dans la présente description la norme ECDIS en tant qu'exemple de norme de certification ; d'autres types de certification sont toutefois envisageables dans le cadre de la présente invention, par exemple conformément à la norme ARPA (pour *"Automatic Radar Plotting Aid*")*.*

Chaque module est par exemple conçu pour recevoir une requête d'interrogation de la présence d'un attribut de compatibilité et pour répondre positivement dans le cas où le module concerné a effectivement un attribut de compatibilité, comme expliqué ci-après.

Le module principal MOD_{P} est lui aussi compatible à la norme mais ne possède pas d'attribut de compatibilité (du fait qu'il n'est pas lui-même appelé par un autre module et qu'il n'est donc pas nécessaire de déterminer si ce module est compatible à la norme ECDIS avant son appel).

Le module principal MOD_{P} gère un indicateur IND du mode de fonctionnement. Cet indicateur est par exemple mémorisé dans la mémoire M associée au processeur P et peut prendre une valeur représentative du fonctionnement en mode non-certifié (ici un mode non-ECDIS) ou une valeur représentative du fonctionnement en mode certifié (ici un mode ECDIS).

Cet indicateur IND est seulement modifiable par le module (ou plus généralement l'élément) chargé de la gestion du mode de fonctionnement certifié, ici le module principal MOD_{P} ; l'indicateur est par exemple modifié du fait d'un choix de l'utilisateur, typiquement par sélection interactive (au moyen de l'interface utilisateur I) du mode de fonctionnement désiré dans un menu affiché sur l'écran ECR.

L'indicateur IND peut en revanche être consulté par les autres modules MOD₁, MOD₂, MOD₃, MOD₄, en particulier par les modules compatibles MOD₁, MOD₂ afin de déterminer le mode de fonctionnement actif et d'adapter éventuellement leur fonctionnement au mode actif, comme expliqué ci-après.

Dans la présente description, on considère la certification par rapport à une norme particulière, ici la norme ECDIS. Ainsi, le mode de fonctionnement non-certifié ne vise pas le respect de la norme concernée ; ce mode de fonctionnement pourrait toutefois être compatible à une autre norme de certification sans sortir du cadre de l'invention.

Dans l'état de fonctionnement présenté en figure 2, le mode non-certifié est actif et l'indicateur IND est donc représentatif du mode de fonctionnement non-certifié (ici non-ECDIS).

Le module principal MOD_{P} peut commander l'exécution d'une pluralité de commandes CMD₁, CM₂, CMD₃ en faisant appel à une fonction associée à la commande concernée au sein d'un module qui comprend cette fonction.

Par exemple, le module principal MOD_{P} est apte à commander l'exécution de la commande CMD₁ en faisant appel à une fonction FN₁ du module MOD₁ ; de même, le module principal MOD_{P} peut commander l'exécution d'une commande CMD₂ en faisant appel à une fonction FN₂ du module MOD₂ ; enfin, le module principal MOD_{P} peut commander l'exécution d'une commande CMD₃ en faisant appel à une fonction FN₃ du module MOD₃.

L'exécution d'une des commandes précitées CMD₁, CMD₂, CMD₃ est par exemple réalisée sur commande de l'utilisateur, par sélection interactive de la commande dans un menu affiché sur l'écran ECR.

Dans l'exemple décrit ici, le module principal MOD_{P} gère également l'affichage sur l'écran ECR, en particulier l'affichage des menus mentionnés ci-dessus et l'affichage des représentations ou objets graphiques (par exemple des icônes) liées au fonctionnement des autres modules.

Dans ce but, le module principal MOD_{P} fait notamment appel à des fonctions de traçage AFF₂, AFF₃ (mises en oeuvres respectivement par des modules associés MOD₂, MOD₃) qui provoquent le traçage de représentations graphiques sur l'écran ECR, lorsqu'ils reçoivent un appel pour ce faire du module principal MOD_{P}, comme expliqué plus en détail ci-après.

Le module MOD₁ est conçu pour recevoir des informations de mesure du capteur C et, lors du fonctionnement en mode non-certifié, pour faire appel à une fonction SRV du module MOD₄, par exemple de sorte que le module MOD₄ traite les données mesurées par le capteur C et mémorise les données traitées dans le moyen de mémorisation S.

Le module MOD₂ contient comme déjà indiqué une fonction FN₂, qui correspond à une commande CMD₂ déclenchable par l'utilisateur, et une fonction AFF₂ de traçage d'une pluralité d'icônes ICON₁ non compatibles au mode de fonctionnement certifié (ici non compatibles aux normes ECDIS).

Le module MOD₃ contient une fonction FN₃ déclenchable par l'utilisateur et une fonction de traçage AFF₃ qui génère sur l'écran ECR une représentation graphique associée au fonctionnement de la commande CMD₃.

La figure 3 représente schématiquement le fonctionnement du système après basculement en mode de fonctionnement certifié (ici le mode ECDIS).

Comme déjà indiqué, le passage du mode non-certifié au mode certifié est par exemple effectué lorsque l'utilisateur sélectionne le mode certifié dans un menu affiché sur l'écran ECR, ce qui a pour conséquence de modifier l'indicateur IND du mode de fonctionnement courant.

Au moment du basculement (et éventuellement à d'autres instants de fonctionnement du système), le module principal MOD_{P} émet une notification à destination de tous les modules MOD₁, MOD₂, MOD₃, SRV (ou éventuellement des seuls modules compatibles MOD₁, MOD₂). Cette notification contient par exemple l'indicateur IND afin de spécifier le nouveau mode de fonctionnement courant.

Les modules compatibles MOD₁, MOD₂ adaptent alors leur fonctionnement au nouveau mode de fonctionnement (ici le mode ECDIS), comme expliqué ci-après. Par ailleurs, le module principal MOD_{P} inhibe le fonctionnement des modules sans attribut de compatibilité MOD₃, SRV, par exemple en émettant une requête de terminaison (c'est-à-dire de fin d'exécution) à chacun des ces modules MOD₃, SRV.

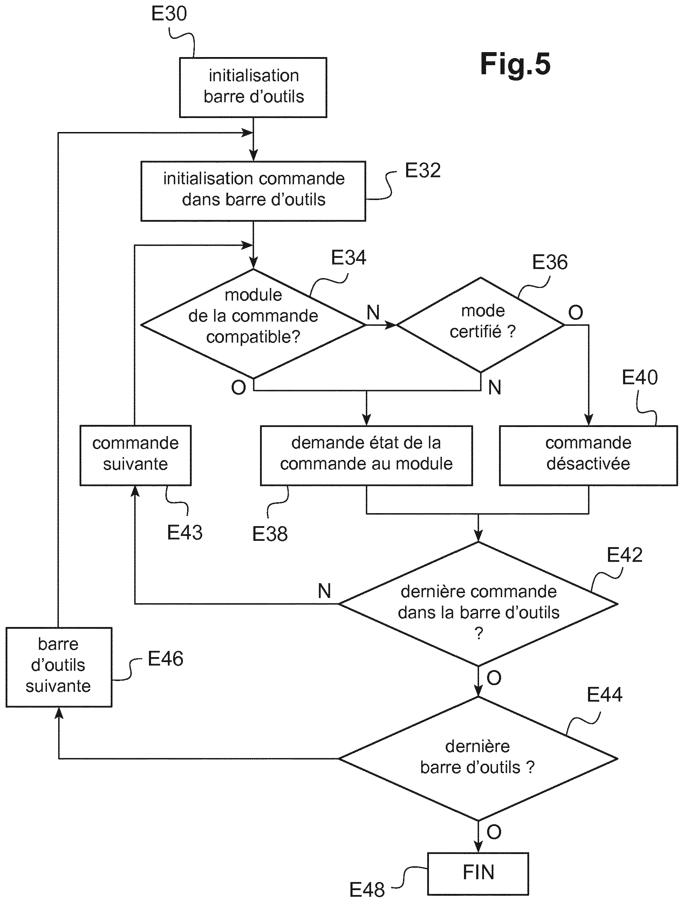

Lorsque le mode certifié est activé, comme représenté à la figure 3, la liste des commandes accessibles à l'utilisateur est en outre mise à jour, par exemple du fait de la mise en oeuvre périodique du procédé décrit plus loin en référence à la figure 5.

Précisément, après avoir détecté la sélection interactive du mode certifié par l'utilisateur, le module principal MOD_{P} désactive notamment les commandes utilisant une fonction d'un module sans attribut de compatibilité, comme décrit en référence à la figure 5, et affiche un menu mis à jour, qui comprend la liste mise à jour des commandes disponibles, ainsi par exemple que les commandes non disponibles avec une représentation graphique différente, par exemple en grisé pour indiquer à l'utilisateur que ces commandes sont inactives.

L'utilisateur ne peut ainsi déclencher que des commandes qui sont mises en oeuvre par l'exécution d'une fonction d'un module compatible à la norme concernée (ici la norme ECDIS), ce qui garantit le fonctionnement certifié du dispositif, malgré la présence des modules sans attribut de compatibilité MOD₃, MOD₄.

En effet, les modules compatibles doivent répondre à des requêtes spécifiques, qui peuvent être émises par le module principal MOD_{P}, telles qu'une requête en changement de mode couleur (mode jour, mode nuit, mode crépuscule) pour l'affichage ou une demande de vérification de danger.

De même, le module compatible MOD₁ est conçu pour tester lors de son exécution la valeur de l'indicateur IND du mode de fonctionnement courant et pour fonctionner en conformité avec la norme requise (ici la norme ECDIS) lorsque l'indicateur IND est représentatif d'un fonctionnement en mode certifié.

Par exemple, le module MOD₁ ne fait plus appel au module MOD₄ (qui n'a pas d'attribut de compatibilité) comme c'était le cas dans le mode de fonctionnement non-certifié représenté en figure 1.

Pour ce faire, le module MOD₁ interroge par exemple le module MOD₄ sur la présence dans ce module d'un attribut de compatibilité et, en l'absence de réponse positive, inhibe tous ses appels au module concerné MOD₄.

De même, lorsque le module principal MOD_{P} fait appel au module MOD₂ pour l'exécution de la commande CMD₂, la fonction FN₂ du module MOD₂ est exécutée de manière adaptée au mode certifié, ici par exemple en prévoyant l'affichage d'icônes certifiées (c'est-à-dire conformes à la norme, ici ECDIS) ICON₂, différentes des icônes ICON₁ affichées dans le mode de fonctionnement non-certifié.

Le module MOD₃ n'ayant pas d'attribut de compatibilité, le module principal MOD_{P} ne fait pas appel à ses fonctions (la fonction FN₃ mettant en oeuvre la commande CMD₃).

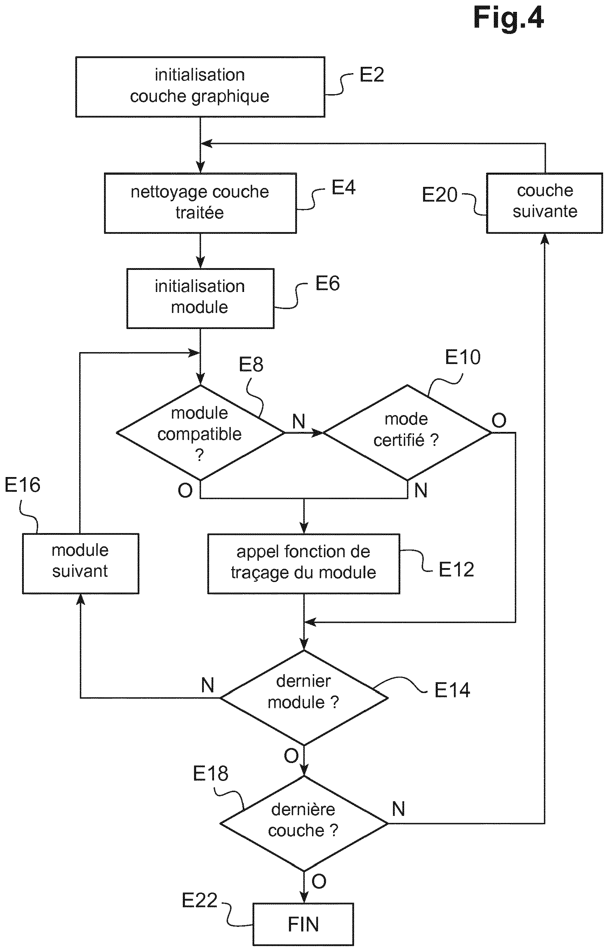

Comme déjà indiqué, le module principal MOD_{P} gère également l'affichage, par exemple conformément au procédé décrit plus loin en référence à la figure 4.

Le module principal MOD_{P} ne fait appel aux fonctions de traçage AFF₂, AFF₃ que pour les fonctions de traçage relatives à des modules compatibles (ici le module MOD₂), conformément à ce qu'indique l'attribut de compatibilité du module concerné, par exemple en réponse à une requête du module principal MOD_{P} dans ce but.

Le module principal MOD_{P} appelle ainsi notamment la fonction de traçage AFF₂ du module MOD₂, ce qui provoque le traçage sur l'écran ECR des icônes certifiées ICON₂, générées lors de l'exécution de la fonction FN₂ comme indiqué ci-dessus.

On obtient ainsi un fonctionnement conforme à la norme ECDIS par le simple changement de valeur de l'indicateur IND du mode de fonctionnement courant, par exemple sur commande de l'utilisateur

La fonction de traçage AFF₃ étant en revanche contenue dans un module sans attribut de compatibilité, le module principal MOD_{P} ne fera pas appel à cette fonction de traçage AFF₃ lorsque l'indicateur IND du mode de fonctionnement courant est représentatif du mode de fonctionnement certifié.

Il ressort de l'exemple qui vient d'être décrit que les modules compatibles MOD_{P}, MOD₁, MOD₂ sont conçus pour appeler une fonction d'un autre module seulement lorsque l'indicateur est représentatif du mode de fonctionnement non-certifié ou lorsque l'autre module a un attribut de compatibilité (comme d'ailleurs expliqué également ci-dessous en référence aux figures 4 et 5).

Ainsi, lorsque l'indicateur est représentatif du mode de fonctionnement certifié, ni le module principal MOD_{P} ni les autres modules compatibles MOD1, MOD2 ne feront appel à un module sans attribut de compatibilité MOD₃, MOD₄. L'inhibition des appels aux modules sans attribut de compatibilité lors du fonctionnement en mode certifié se propage donc dans les modules compatibles : dès lors que l'exécution du procédé d'aide à la navigation débute dans le module principal MOD_{P} (compatible), seul des appels vers des modules compatibles pourront être effectués en mode certifié, modules compatibles qui eux même n'appelleront que des modules compatibles en mode de fonctionnement certifié. On s'assure ainsi par récursivité qu'aucun module sans attribut de compatibilité ne pourra être appelé lors du fonctionnement en mode certifié.

La caractéristique prévue ci-dessus pour les modules compatibles (appel d'une fonction d'un module seulement en mode de fonctionnement non-certifié ou lorsque le module a un attribut de compatibilité) peut être vérifiée lors de la certification ; les modules sans attribut de compatibilité peuvent en revanche être conçus indépendamment de toute certification : du fait de la conception proposée, ils pourront être appelés en mode de fonctionnement non-certifié (ici non ECDIS), mais ne seront pas appelés en mode de fonctionnement certifié (ici ECDIS) et ne risqueront donc pas de perturber le fonctionnement de ce mode certifié.

La figure 4 représente un exemple de procédé d'affichage de représentations graphiques sur l'écran ECR.

On considère par exemple dans l'exemple décrit que l'affichage est formé de la superposition de plusieurs couches graphiques, chaque module pouvant tracer un ou plusieurs objets graphiques (tels que des icônes) dans chaque couche graphique.

Le procédé de la figure 4 commence à l'étape E2 par l'initialisation de la couche graphique, c'est-à-dire par la prise en compte d'une première couche graphique comme la couche graphique courante.

On procède alors à l'étape E4 au nettoyage de la couche graphique courante afin de pouvoir mettre à jour l'ensemble des éléments graphiques de cette couche.

On procède alors à l'étape E6 à l'initialisation du module traité, c'est-à-dire à la prise en compte d'un premier module comme le module courant.

On détermine alors à l'étape E8 si le module courant est un module compatible, ici à la norme ECDIS, par exemple en interrogeant le module courant sur la présence d'un attribut de compatibilité pour ce module.

Si le module est déterminé comme compatible (par exemple du fait de la présence d'un attribut de compatibilité pour ce module), on procède directement à l'étape E12 décrite plus bas.

En revanche, lorsque le module n'est pas compatible au fonctionnement en mode certifié, c'est-à-dire par exemple lorsque le module courant ne retourne pas une réponse positive à une requête de présence d'attribut de compatibilité, on procède à l'étape E10 à laquelle on vérifie si le mode de fonctionnement courant, tel que représenté par l'indicateur IND, est le mode de fonctionnement certifié.

Dans la négative, on procède à l'étape E12 à laquelle on appelle la fonction de traçage du module courant.

On procède ensuite à l'étape E14 décrite plus bas.

Si l'indicateur du mode de fonctionnement IND est au contraire représentatif du mode de fonctionnement certifié (test de l'étape E10), on procède directement à l'étape E14 sans faire appel à la fonction de traçage (comme prévu à l'étape E12).

Ainsi, s'il a été déterminé à l'étape E8 que le module n'était pas compatible à un fonctionnement en mode certifié et que le mode certifié est actif, il n'est pas fait appel à la fonction de traçage du module concerné.

On détermine à l'étape E14 si le module courant est le dernier module à considérer.

Dans la négative, on considère le module suivant (étape E16) et le fonctionnement du programme boucle à l'étape E8 pour traitement du module suivant.

S'il est déterminé à l'étape E14 que le module courant est le dernier module à traiter, on procède à l'étape E18.

On détermine à l'étape E18 si la couche courante est la dernière couche à traiter.

Dans la négative, on considère la couche suivante (à l'étape Ee20) et le fonctionnement boucle à l'étape E4 pour traitement de la nouvelle couche graphique courante.

S'il est déterminé au contraire à l'étape E18 que la couche graphique traitée précédemment est la dernière couche à traiter, le procédé de gestion de l'affichage se termine à l'étape E22.

La figure 5 représente les étapes principales d'un procédé de mise à jour d'un menu interactif, formé d'une pluralité de barres d'outils, qui comprennent chacune une liste de commandes telles que celles mentionnées ci-dessus.

Le procédé débute à l'étape E30 à laquelle on initialise la barre d'outils traitée, c'est-à-dire à laquelle on considère la première barre d'outils comme la barre d'outils courante.

On procède ensuite à l'étape E32 à laquelle on initialise la commande courante au sein de la barre d'outils courante, c'est-à-dire au cours de laquelle on considère la première commande à traiter parmi les différentes commandes de la barre d'outils courante.

On procède ensuite à l'étape E34 à laquelle on détermine si le module qui contient la fonction mettant en oeuvre la commande courante est compatible au fonctionnement en mode certifié (ici compatible à la norme ECDIS). Pour ce faire, le module principal MOD_{P} émet par exemple une requête d'interrogation de la présence d'un attribut de compatibilité à destination du module qui contient la fonction mettant en oeuvre la commande courante.

S'il est déterminé que ce module est compatible (c'est-à-dire ici si le module principal MOD_{P} reçoit en provenance de ce module une confirmation de la présence d'un attribut de compatibilité dans ce module contenant la fonction associée à la commande courante), on procède directement à l'étape E38 décrite plus bas.

S'il est au contraire déterminé à l'étape E34 que le module contenant la fonction mettant en oeuvre la commande courante n'est pas compatible au mode de fonctionnement certifié, on procède à l'étape E36 à laquelle on détermine si le mode de fonctionnement courant est certifié, par exemple en consultant l'indicateur IND représentatif du mode de fonctionnement courant.

Dans la négative, on procède à l'étape E38 à laquelle le module principal MOD_{P} émet une requête d'état de la commande à destination du module contenant la fonction mettant en oeuvre la commande courante.

Dans ce cas, la commande est activée ou désactivée en fonction de la réponse émise par le module concerné : il revient au module concerné de déterminer si l'utilisateur peut ou non demander l'exécution de la commande concernée dans le mode courant.

On remarque que lorsque le module concerné est compatible (réponse positive au test de l'étape E34), le module concerné consulte l'indicateur IND du mode de fonctionnement courant et détermine, en fonction du mode de fonctionnement courant, si la commande concernée doit ou non être activée.

La barre d'outils est alors mise à jour en fonction de la réponse reçue du module concerné : par exemple, la commande est présentée comme déclenchable lorsque le module concerné indique un état activé de la commande concernée, et comme inactive (par exemple sous forme grisée) lorsque le module concerné indique que la commande est inactive.

S'il est déterminé à l'étape E36 que le mode de fonctionnement courant est le mode de fonctionnement certifié (par lecture de l'indicateur du mode de fonctionnement courant IND), on procède à l'étape E40 à laquelle la commande courante est désactivée. La barre d'outils est alors mise à jour afin d'indiquer que la commande courante n'est plus active, par exemple en affichant cette commande en grisé et en empêchant la sélection de la fonctionnalité associée par l'utilisateur.

Ainsi, lorsque le module contenant la fonction mettant en oeuvre la commande courante n'est pas désigné comme compatible (tel que déterminé par l'absence d'attribut de compatibilité du module concerné) et que le mode de fonctionnement courant est certifié (tel que déterminé par l'indicateur IND), la commande est systématiquement désactivée par le module principal MOD_{P}, ce qui permet d'inhiber toute exécution d'une fonction dans un module qui ne fonctionnerait pas selon la norme ECDIS.

L'étape E38 comme l'étape E40 sont suivies de l'étape E42 à laquelle on détermine si la commande courante est la dernière commande à traiter dans la barre d'outils courante. Dans la négative, on considère la commande suivante dans la barre d'outils pour son traitement (étape E43) et on boucle dans ce but à l'étape E34 précédemment décrite.

Si la commande précédemment traitée est la dernière commande à traiter dans la barre d'outils courante, l'étape E42 est suivie de l'étape E44 à laquelle on détermine si la barre d'outils précédemment traitée est la dernière barre d'outils à traiter.

Dans la négative, on considère la barre d'outils suivante (étape E46) pour son traitement, en bouclant le fonctionnement à l'étape E32 déjà décrite.

Si la barre d'outils précédemment traitée est la dernière barre d'outils à traiter comme déterminé à l'étape E44, le procédé de mise à jour des barres d'outils s'achève à l'étape E48.

L'invention n'est pas limitée à l'exemple de réalisation qui vient d'être décrit.

En particulier, les barres d'outils sont un exemple de menus interactifs utilisables et les icônes sont un exemple d'éléments graphiques envisageables pour aider l'utilisateur dans le cadre de sa navigation (ici maritime). D'autres types de menus interactifs et d'éléments graphiques, ou représentations graphiques, sont envisageables sans sortir du cadre de l'invention.

De même, on peut prévoir d'utiliser, en plus du mode de fonctionnement non-certifié et du mode de fonctionnement certifié, un mode de fonctionnement certifié alternatif, par exemple un mode de fonctionnement du type *"Cartes et mobiles seuls"* dans lequel tous les objets graphiques, outils de navigation et autres informations distinctes de la cartographie et des mobiles (ici les embarcations) ne sont pas affichés.

L'indicateur du mode de fonctionnement courant peut alors prendre (sur commande de l'utilisateur au moyen de l'interface I) une valeur représentative de ce mode de fonctionnement certifié alternatif. Ce mode de fonctionnement certifié alternatif est alors géré comme le mode de fonctionnement certifié décrit ci-dessus : les modules compatibles sont conçus pour appeler une fonction d'un autre module seulement lorsque l'indicateur est représentatif du mode de fonctionnement non-certifié ou lorsque l'autre module a un attribut de compatibilité. Ainsi, lors du fonctionnement en mode certifié ou certifié alternatif, seuls des modules compatibles, conçus pour consulter l'indicateur IND et pour fonctionner le cas échéant en mode de fonctionnement certifié alternatif, sont exécutés.

En outre, dans l'exemple décrit ci-dessus, le module principal MOD_{P} est conçu pour gérer le mode certifié et l'affichage, comme décrit ci-dessus, notamment dans le cadre des procédés représentés aux figures 4 et 5.

Selon une variante envisageable, en particulier lorsqu'une architecture de type composants/conteneur est utilisée, la gestion du mode certifié et/ou la gestion de l'affichage pourrait être mis en oeuvre au niveau du conteneur (parfois dénommé noyau ou structure d'accueil).

On pourrait de même prévoir selon une autre variante que la gestion du mode certifié (ECDIS dans le cas considéré ici) et/ou la gestion de l'affichage soient mises en oeuvre par un autre module compatible que le module principal MOD_{P} ; le module principal pourrait dans ce cas faire appel à cet autre module pour la gestion du mode certifié et de l'affichage, cet autre module étant alors conçu pour faire appel aux modules MOD₁, MOD₂, MOD₃ dans les mêmes conditions qu'exposé ci-dessus à propos du module principal MOD_{P}.

## Revendications

1. Système d'aide à la navigation, conçu pour basculer entre un mode de fonctionnement certifié selon une norme et un mode de fonctionnement non-certifié,
**caractérisé en ce qu'**il est basé sur une architecture modulaire, **en ce qu'**il est mis en oeuvre par l'exécution de modules compatibles à la norme (MOD₁, MOD₂) et ayant un attribut de compatibilité et de modules (MOD₃, MOD₄) sans attribut de compatibilité,
**en ce qu'**il comprend un indicateur (IND) représentatif du mode de fonctionnement courant,
et **en ce que** les modules compatibles (MOD₁, MOD₂, MOD_{P}) sont conçus pour appeler une fonction (FN1 ; FN2 ; FN3 ; SRV) d'un autre module (MOD₁ ; MOD₂ ; MOD₃ ; MOD₄) seulement lorsque l'indicateur (IND) est représentatif du mode de fonctionnement non-certifié ou lorsque l'autre module (MOD₁ ; MOD₂) a un attribut de compatibilité.

2. Système d'aide à la navigation selon la revendication 1, dans lequel au moins un module compatible (MOD₁ ; MOD₂) est conçu pour consulter l'indicateur (IND) et pour adapter son fonctionnement en fonction du mode de fonctionnement désigné par l'indicateur (IND).

3. Système d'aide à la navigation selon la revendication 1, dans lequel le système est conçu pour émettre, à destination d'au moins un module compatible (MOD₁ ; MOD₂), une notification spécifiant que l'indicateur (IND) a une valeur déterminée et dans lequel le module compatible (MOD₁ ; MOD₂) est conçu pour adapter son fonctionnement en fonction du mode de fonctionnement désigné par ladite valeur déterminée.

4. Système d'aide à la navigation selon l'une des revendications 1 à 3, dans lequel au moins un module compatible (MOD₁ ; MOD_{P}) est conçu pour déterminer si un autre module (MOD₁ ; MOD₂ ; MOD₃ ; MOD₄) a un attribut de compatibilité par interrogation dudit autre module (MOD₁ ; MOD₂ ; MOD₃ ; MOD₄).

5. Système d'aide à la navigation selon l'une des revendications 1 à 4, dans lequel un élément de gestion d'interface graphique (MOD_{P}) est conçu pour appeler une fonction de traçage (AFF2 ; AFF3) sur un écran (ECR) du système, mise en oeuvre par un module graphique (MOD₂ ; MOD₃), seulement lorsque l'indicateur (IND) est représentatif du mode de fonctionnement non-certifié ou lorsque le module graphique (MOD₂) a un attribut de compatibilité.

6. Système d'aide à la navigation selon l'une des revendications 1 à 5, dans lequel un élément de gestion du mode de fonctionnement (MOD_{P}) est conçu pour interroger un module donné (MOD₁ ; MOD₂ ; MOD₃) sur la disponibilité d'une commande (CMD1 ; CMD2 ; CMD3) du module donné (MOD₁ ; MOD₂ ; MOD₃) lorsque l'indicateur (IND) est représentatif du mode de fonctionnement non-certifié ou lorsque le module donné (MOD₁ ; MOD₂) a un attribut de compatibilité, et pour désactiver ladite commande dans les autres cas.

7. Système d'aide à la navigation selon l'une des revendications 1 à 6, dans lequel l'indicateur peut prendre une valeur représentative d'un mode de fonctionnement certifié alternatif et dans lequel au moins un module compatible est conçu pour adapter son fonctionnement au mode certifié alternatif lorsque l'indicateur a la valeur représentative du mode de fonctionnement certifié alternatif.

8. Procédé mis en oeuvre dans un système d'aide à la navigation conçu pour basculer entre un mode de fonctionnement certifié selon une norme et un mode de fonctionnement non-certifié,
**caractérisé en ce que** le système est basé sur une architecture modulaire, **en ce que** le procédé est mis en oeuvre par l'exécution de modules compatibles à la norme (MOD₁, MOD₂) ayant un attribut de compatibilité et de modules (MOD₃, MOD₄) sans attribut de compatibilité,
et **en ce que** le procédé comprend les étapes suivantes :
- mise à jour d'un indicateur (IND) représentatif du mode de fonctionnement courant,
- appel d'une fonction (FN1 ; FN2 ; FN3 ; SRV) d'un autre module seulement lorsque l'indicateur (IND) est représentatif du mode de fonctionnement non-certifié ou lorsque l'autre module (MOD₁ ; MOD₂) a un attribut de compatibilité.

9. Procédé selon la revendication 8, comprenant les étapes suivantes :
- consultation de l'indicateur (IND) par un module compatible (MOD₁ ; MOD₂) ;
- adaptation de son fonctionnement par le module compatible (MOD₁ ; MOD₂) en fonction du mode de fonctionnement désigné par l'indicateur (IND).

10. Procédé selon la revendication 8, comprenant les étapes suivantes :
- émission, à destination d'au moins un module compatible (MOD₁ ; MOD₂), d'une notification spécifiant que l'indicateur (IND) a une valeur déterminée ;
- adaptation de son fonctionnement par le module compatible (MOD₁ ; MOD₂) en fonction du mode de fonctionnement désigné par ladite valeur déterminée.

11. Procédé selon l'une des revendications 8 à 10, comprenant une étape d'interrogation d'un autre module (MOD₁ ; MOD₂ ; MOD₃ ; MOD₄) par un module compatible (MOD₁ ; MOD_{P}) pour déterminer si l'autre module (MOD₁ ; MOD₂ ; MOD₃ ; MOD₄) a un attribut de compatibilité.

12. Procédé selon l'une des revendications 8 à 11, comprenant une étape d'appel, par un élément de gestion d'interface graphique (MOD_{P}), d'une fonction de traçage (AFF2 ; AFF3) sur un écran (ECR) du système, mise en oeuvre par un module graphique (MOD₂ ; MOD₃), seulement lorsque l'indicateur (IND) est représentatif du mode de fonctionnement non-certifié ou lorsque le module graphique (MOD₂) a un attribut de compatibilité.

13. Procédé selon l'une des revendications 8 à 12, comprenant une étape d'interrogation, par un élément de gestion du mode de fonctionnement (MOD_{P}), d'un module donné (MOD₁ ; MOD₂ ; MOD₃) sur la disponibilité d'une commande (CMD1 ; CMD2 ; CMD3) du module donné (MOD₁ ; MOD₂ ; MOD₃) lorsque l'indicateur (IND) est représentatif du mode de fonctionnement non-certifié ou lorsque le module donné (MOD₁ ; MOD₂) a un attribut de compatibilité, ou de désactivation de ladite commande dans les autres cas.

14. Procédé selon l'une des revendications 8 à 13, dans lequel l'indicateur peut prendre une valeur représentative d'un mode de fonctionnement certifié alternatif et comprenant une étape d'adaptation, par au moins un module compatible, de son fonctionnement au mode certifié alternatif lorsque l'indicateur a la valeur représentative du mode de fonctionnement certifié alternatif.

## Patentansprüche

1. Navigationssystem, das dafür konzipiert ist, zwischen einer zertifizierten Betriebsart gemäß einer Norm und einer nicht zertifizierten Betriebsart zu wechseln,
**dadurch gekennzeichnet, daß** es auf einem modularen Aufbau basiert, daß es durch die Ausführung von mit der Norm (MOD₁, MOD₂) kompatiblen und ein Kompatibilitätsattribut aufweisenden Modulen und von Modulen (MOD₃, MOD₄) ohne Kompatibilitätsattribut betrieben wird,
daß es einen Indikator (IND) aufweist, der für die laufende Betriebsart repräsentativ ist, und
daß die kompatiblen Module (MOD₁, MOD₂, MOD_{P}) dazu ausgelegt sind, eine Funktion (FN1; FN2; FN3; SRV) eines anderen Moduls (MOD₁, MOD₂, MOD₃, MOD₄) nur dann aufzurufen, wenn der Indikator (IND) für die nichtzertifizierte Betriebsart repräsentativ ist oder wenn das andere Modul (MOD₁, MOD₂) ein Kompatibilitätsattribut hat.

2. Navigationssystem gemäß Anspruch 1, bei dem wenigstens ein kompatibles Modul (MOD₁, MOD₂) dazu ausgelegt ist, den Indikator (IND) abzufragen und seinen Betrieb in Abhängigkeit von der vom Indikator (IND) angegebenen Betriebsart anzupassen.

3. Navigationssystem gemäß Anspruch 1, bei dem das System dazu ausgelegt ist, an wenigstens ein kompatibles Modul (MOD₁, MOD₂) eine Nachricht abzusenden, die angibt, daß der Indikator (IND) einen bestimmten Wert hat, und bei dem das kompatible Modul (MOD₁, MOD₂) dazu ausgelegt ist, seinen Betrieb in Abhängigkeit von der durch den bestimmten Wert angegebenen Betriebsart anzupassen.

4. Navigationssystem gemäß einem der Ansprüche 1 bis 3, bei dem wenigstens ein kompatibles Modul (MOD₁, MOD₂) dazu ausgelegt ist, durch Abfragen eines anderen Moduls (MOD₁, MOD₂, MOD₃, MOD₄) zu bestimmen, ob das andere Modul (MOD₁, MOD₂, MOD₃, MOD₄) ein Kompatibilitätsattribut hat.

5. Navigationssystem gemäß einem der Ansprüche 1 bis 4, bei dem ein Element für die Verwaltung eines graphischen Interface (MOD_{P}) dazu ausgelegt ist, eine Verfolgungsfunktion (AFF2; AFF3) auf einen Bildschirm (ECR) des Systems zu rufen, die durch ein Graphikmodul (MOD₂, MOD₃) nur dann durchgeführt wird, wenn der Indikator (IND) für die nicht zertifizierte Betriebsart repräsentativ ist oder das Graphikmodul (MOD₂) ein Kompatibilitätsattribut hat.

6. Navigationssystem gemäß einem der Ansprüche 1 bis 5, bei dem ein Element für die Verwaltung eines graphischen Interface (MODp) dazu ausgelegt ist, ein gegebenes Modul (MOD₁, MOD₂, MOD₃) hinsichtlich der Verfügbarkeit eines Befehls (CMD1; CMD2; CMD3) des gegebenen Moduls (MOD₁, MOD₂, MOD₃) abzufragen, wenn der Indikator (IND) für die nicht zertifizierte Betriebsart repräsentativ ist oder das Graphikmodul (MOD₂) ein Kompatibilitätsattribut hat, und den Befehl in allen anderen Fällen zu deaktivieren.

7. Navigationssystem gemäß einem der Ansprüche 1 bis 6, bei dem der Indikator einen für eine alternative zertifizierte Betriebsart repräsentativen Wert annehmen kann und bei dem wenigstens ein kompatibles Modul dazu ausgelegt ist, seinen Betrieb an die alternative zertifizierte Art anzupassen, wenn der Indikator den für die alternative zertifizierte Betriebsart repräsentativen Wert hat.

8. Verfahren, das in einem Navigationssystem durchgeführt wird, das dafür konzipiert ist, zwischen einer zertifizierten Betriebsart gemäß einer Norm und einer nicht zertifizierten Betriebsart zu wechseln, **dadurch gekennzeichnet, daß** das System auf einem modularen Aufbau basiert, daß es durch die Ausführung von mit der Norm (MOD₁, MOD₂) kompatiblen und ein Kompatibilitätsattribut aufweisenden Modulen und von Modulen (MOD₃, MOD₄) ohne Kompatibilitätsattribut betrieben wird,
und **dadurch gekennzeichnet, daß** das Verfahren die folgenden Schritte aufweist:
- Aktualisieren eines für die laufende Betriebsart repräsentativen Indikators (IND),
- Aufrufen einer Funktion (FN1; FN2; FN3; SRV) eines anderen Moduls nur dann, wenn der Indikator (IND) für die nichtzertifizierte Betriebsart repräsentativ ist oder wenn das andere Modul (MOD₁, MOD₂) ein Kompatibilitätsattribut hat.

9. Verfahren gemäß Anspruch 8, das die folgenden Schritte aufweist:
- Befragen des Indikators (IND) durch ein kompatibles Modul (MOD₁, MOD₂),
- Anpassen seines Betriebs durch das kompatible Modul (MOD₁, MOD₂) in Abhängigkeit von der durch den Indikator (IND) bezeichneten Betriebsart.

10. Verfahren gemäß Anspruch 8, das die folgenden Schritte aufweist:
- Aussenden einer Nachricht an wenigstens ein kompatibles Modul (MOD₁, MOD₂), die angibt, daß der Indikator (IND) einen bestimmten Wert hat,
- Anpassen seines Betriebs durch das kompatible Modul (MOD₁, MOD₂) in Abhängigkeit von der durch den bestimmten Wert bezeichneten Betriebsart.

11. Verfahren gemäß einem der Ansprüche 8 bis 10, das einen Schritt des Abfragens eines anderen Moduls (MOD₁, MOD₂, MOD₃, MOD₄) durch ein kompatibles Modul (MOD₁, MOD_{P}) aufweist, um zu bestimmen, ob das andere Modul (MOD₁, MOD₂, MOD₃, MOD₄) ein Kompatibilitätsattribut hat.

12. Verfahren gemäß einem der Ansprüche 8 bis 11, das einen Schritt aufweist, bei dem durch ein Element für die Verwaltung eines graphischen Interface (MOD_{P}) auf einen Bildschirm (ECR) des Systems eine Verfolgungsfunktion (AFF2; AFF3) gerufen wird, die durch ein Graphikmodul (MOD₂, MOD₃) nur dann durchgeführt wird, wenn der Indikator (IND) für die nicht zertifizierte Betriebsart repräsentativ ist oder das Graphikmodul (MOD₂) ein Kompatibilitätsattribut hat.

13. Verfahren gemäß einem der Ansprüche 8 bis 12, das einen Schritt aufweist, bei dem ein gegebenes Modul (MOD₁, MOD₂, MOD₃) durch ein Element für die Verwaltung eines graphischen Interface (MOD_{P}) hinsichtlich der Verfügbarkeit eines Befehls (CMD1; CMD2; CMD3) des gegebenen Moduls (MOD₁, MOD₂, MOD₃) abgefragt wird, wenn der Indikator (IND) für die nicht zertifizierte Betriebsart repräsentativ ist oder das Graphikmodul (MOD₂) ein Kompatibilitätsattribut hat, oder der Befehl in den anderen Fällen deaktiviert wird.

14. Verfahren gemäß einem der Ansprüche 8 bis 13, bei dem der Indikator einen für eine alternative zertifizierte Betriebsart repräsentativen Wert annehmen kann und das einen Schritt aufweist, bei dem sein Betrieb durch wenigstens ein kompatibles Modul an die alternative zertifizierte Art angepaßt wird, wenn der Indikator den für die alternative zertifizierte Betriebsart repräsentativen Wert hat.

## Claims

1. Navigational aid system, designed to switch between an operating mode certified according to a standard and a non-certified operating mode,
**characterized in that** it is based on a modular architecture, **in that** it is implemented by the execution of modules (MOD₁, MOD₂) compliant with the standard and having an attribute of compliance and of modules (MOD₃, MOD₄) with no attribute of compliance,
**in that** it comprises an indicator (IND) representative of the current operating mode,
and **in that** the compliant modules (MOD₁, MOD₂, MOD_{P}) are designed to call a function (FN1; FN2; FN3; SRV) of another module (MOD₁; MOD₂; MOD₃; MOD₄) only when the indicator (IND) is representative of the non-certified operating mode or when the other module (MOD₁; MOD₂) has an attribute of compliance.

2. Navigational aid system according to claim 1, wherein at least one compliant module (MOD₁; MOD₂) is designed to look at the indicator (IND) and to adapt its operation as a function of the operating mode indicated by the indicator (IND).

3. Navigational aid system according to claim 1, wherein the system is designed to transmit, to at least one compliant module (MOD₁; MOD₂), a notification specifying that the indicator (IND) has a determined value and wherein the compliant module (MOD₁; MOD₂) is designed to adapt its operation as a function of the operating mode indicated by said determined value.

4. Navigational aid system according to one of claims 1 to 3, wherein at least one compliant module (MOD₁; MOD_{P}) is designed to determine if another module (MOD₁; MOD₂; MOD₃; MOD₄) has an attribute of compliance by interrogating said other module (MOD₁; MOD₂; MOD₃; MOD₄).

5. Navigational aid system according to one of claims 1 to 4, wherein a graphic interface management element (MOD_{P}) is designed to call a function (AFF2; AFF3) of tracing on a screen (ECR) of the system, implemented by a graphic module (MOD₂; MOD₃), only when the indicator (IND) is representative of the non-certified operating mode or when the graphic module (MOD₂) has an attribute of compliance.

6. Navigational aid system according to one of claims 1 to 5, wherein an operating mode management element (MOD_{P}) is designed to interrogate a given module (MOD₁; MOD₂; MOD₃) about the availability of a command (CMD1; CMD2; CMD3) of the given module (MOD₁; MOD₂; MOD₃) when the indicator (IND) is representative of the non-certified operating mode or when the given module (MOD₁; MOD₂) has an attribute of compliance, and to deactivate said command in the other cases.

7. Navigational aid system according to one of claims 1 to 6, wherein the indicator can take a value representative of an alternative certified operating mode and wherein at least one compliant module is designed to adapt its operation to the alternative certified mode when the indicator has the value representative of the alternative certified operating mode.

8. Method implemented in a navigational aid system designed to switch between an operating mode certified according to a standard and a non-certified operating mode,
**characterized in that** the system is based on a modular architecture, **in that** the method is implemented by the execution of modules (MOD₁, MOD₂) compliant with the standard, having an attribute of compliance, and of modules (MOD₃, MOD₄) having no attribute of compliance,
and **in that** the method comprises the following steps:
- updating of an indicator (IND) representative of the current operating mode,
- calling of a function (FN1; FN2; FN3; SRV) of another module only when the indicator (IND) is representative of the non-certified operating mode or when the other module (MOD₁; MOD₂) has an attribute of compliance.

9. Method according to claim 8, comprising the following steps:
- look-up of the indicator (IND) by a compliant module (MOD₁; MOD₂);
- adaptation, by the compliant module (MOD₁; MOD₂), of the operation thereof as a function of the operating mode indicated by the indicator (IND).

10. Method according to claim 8, comprising the following steps:
- transmission, to at least one compliant module (MOD₁; MOD₂), of a notification specifying that the indicator (IND) has a determined value;
- adaptation, by the compliant module (MOD₁; MOD₂), of the operation thereof as a function of the operating mode indicated by said determined value.

11. Method according to one of claims 8 to 10, comprising a step of interrogation of another module (MOD₁; MOD₂; MOD₃; MOD₄) by a compliant module (MOD₁; MOD_{P}) to determine if the other module (MOD₁; MOD₂; MOD₃; MOD₄) has an attribute of compliance.

12. Method according to one of claims 8 to 11, comprising a step of calling, by a graphic interface management element (MOD_{P}), of a function (AFF2; AFF3) of tracing on a screen (ECR) of the system, implemented by a graphic module (MOD₂; MOD₃), only when the indicator (IND) is representative of the non-certified operating mode or when the graphic module (MOD₂) has an attribute of compliance.

13. Method according to one of claims 8 to 12, comprising a step of interrogation, by an operating mode management element (MOD_{P}), of a given module (MOD₁; MOD₂; MOD₃) about the availability of a command (CMD1; CMD2; CMD3) of the given module (MOD₁; MOD₂; MOD₃) when the indicator (IND) is representative of the non-certified operating mode or when the given module (MOD₁; MOD₂) has an attribute of compliance, or of deactivation of said command in the other cases.

14. Method according to one of claims 8 to 13, wherein the indicator can take a value representative of an alternative certified operating mode and comprising a step of adaptation, by at least one compliant module, of the operation thereof to the alternative certified operating mode when the indicator has the value representative of the alternative certified operating mode.
